## Europäisches Patentamt

## European Patent Office

## Office européen des brevets

(19)

(11) Veröffentlichungsnummer: **0 059 394**

**A2**

(12) # EUROPÄISCHE PATENTANMELDUNG

(21) Anmeldenummer: **82101285.3**

(22) Anmeldetag: **19.02.82**

(51) Int. Cl.³: **B 65 G 53/06**
**B 65 G 53/40, B 65 D 90/62**

(30) Priorität: **27.02.81 DE 3107545**
**12.11.81 DE 3145017**

(43) Veröffentlichungstag der Anmeldung:
**08.09.82 Patentblatt 82/36**

(84) Benannte Vertragsstaaten:
**BE CH DE FR GB IT LI NL SE**

(71) Anmelder: **König, Gustav**
**Stadtwaldstrasse 69**
**D-8052 Moosburg(DE)**

(72) Erfinder: **König, Gustav**
**Stadtwaldstrasse 69**
**D-8052 Moosburg(DE)**

(74) Vertreter: **Weickmann, Heinrich, Dipl.-Ing. et al,**
**Patentanwälte Dipl.-Ing. H. Weickmann Dipl.-Phys.Dr. K.**
**Fincke Dipl.-Ing. F.A. Weickmann Dipl.-Chem. B. Huber**
**Dr.-Ing. H. Liska Möhlstrasse 22**
**D-8000 München 86(DE)**

(54) Pneumatische Förderanlage.

(57) Die pneumatische Förderanlage für Schüttgut umfaßt einen druckdicht verschließbaren Drucksilo (7) für das Schüttgut, von dessen Unterseite eine Förderrohrleitung (19) ausgeht. Das Schüttgut tritt an der Unterseite eines Auslauftrichters (13) des Drucksilos (7) über einen Kegelverschluß (15) in die Förderrohrleitung (19) ein. Eine Druckgasquelle (29), die über eine Leitung (23) unmittelbar an die Förderrohrleitung (19) angeschlossen ist, bläst das Schüttgut über die Förderrohrleitung (19) aus. Hierbei wird der Größte Teil des über die Förderrohrleitung (19) abströmenden Druckgases über die Leitung (23) zugeführt. Zur exakten Dosierung der Schüttgut-Förderleistung öffnet und schließt eine Steuerung (37) periodisch den Kegelverschluß (15), was zu einer pfropfenförmigen Schüttgutaufgabe führt. Die Öffnungsdauer und die Verschlußdauer des Kegelverschlusses (15) ist hierbei stufenlos einstellbar. Ein den Gasdruck der Leitung (23) erfassender Druckfühler (41) schließt über die Steuerung (37) den Kegelverschluß (15) unabhängig von der periodischen Öffnungs- und Schließbewegung, wenn der Druck über einen vorbestimmten Wert hinaus ansteigt. Hierdurch wird das Verstopfen der Förderrohrleitung (19) sicher vermieden. Da der Kegelverschluß (15) im Nebenschluß zum Strömungsweg des Druckgases angeordnet ist, ist er nur geringem Verschleiß unterworfen. Mittels der Förderanlage kann problemlos aus mehreren Drucksilos zeitlich gestaffelt über eine gemeinsame Förderrohrleitung gefördert werden. Dies kann zum Mischen von Schüttgut ausgenutzt werden.

FIG. 1

Croydon Printing Company Ltd.

Pneumatische Förderanlage

Die Erfindung betrifft eine pneumatische Förderanlage für Schüttgut, mit einem druckdicht verschließbaren Drucksilo für das Schüttgut, welcher an seiner Unterseite einen mittels eines höhenbeweglichen Kegels querschnittsveränderbaren Schüttgutauslaß aufweist und mit einer an eine Druckgasquelle angeschlossenen Förderrohrleitung, in deren Strömungsweg der Schüttgutauslaß von oben her einmündet.

Eine solche Förderanlage ist aus dem deutschen Patent 25 33 070 bekannt. Der Schüttgutauslaß des in seinem unteren Bereich trichterförmigen Silos ist über ein vertikales Rohrstück mit der horizontal unter dem Drucksilo vorbeiführenden Förderrohrleitung verbunden. Oberhalb des Schüttgutauslasses des Silos ist ein kegelförmiger Dosierkörper angeordnet, der von einem Arbeitszylinder angetrieben eine kontinuierliche Hubbewegung ausführt. Die Größe des Hubs bzw. die Hubfrequenz wird in Abhängigkeit vom Druck in der Förderrohrleitung gesteuert und bestimmt die Dosierung des der Förderrohrleitung zugeführten Schüttguts.

Obwohl der oberhalb des Schüttgutauslasses in dem Auslauftrichter angeordnete Dosierkörper aufgrund seiner Hubbewegung in gewissem Maße Brückenbildung des Schüttguts vermeidet, können Förderschwierigkeiten auftreten. Der Dosierkörper ist in einem Bereich des Auslauftrichters angeordnet, in welchem das Schüttgut nur sehr wenig fließt. Dementsprechend ist der Dosierkörper auch nicht als Absperrorgan ausgebildet, sondern ändert lediglich den Durchtrittsquerschnitt des Schüttgutauslasses. Aufgrund dieser Anordnung ist die den Hub bzw. die Hubfrequenz des Dosierkörpers abhängig vom Druck in der Förderleitung steuernde Regelschaltung mit einer relativ großen Totzeit behaftet, was sich bei einer Vielzahl zu fördernder Materialien, beispielsweise flockigem Material, nachteilig auf die Kontinuität der Förderung auswirkt.

Aufgabe der Erfindung ist es, eine pneumatische Förderanlage anzugeben, die eine kontinuierliche, gleichmäßige Förderung von Schüttgut aus einem Drucksilo über eine Förderrohrleitung erlaubt. Die pneumatische Förderanlage soll mit einem geringen konstruktiven Aufwand an Bauteilen, die einem hohen Verschleiß ausgesetzt sind, wie z. B. Absperrorganen der Förderrohrleitung, realisiert werden können.

Ausgehend von der eingangs näher erläuterten pneumatischen Förderanlage wird diese Aufgabe erfindungsgemäß dadurch gelöst, daß der Kegel mit zum Schüttgutauslaß weisender Spitze auf der zur Förderrohrleitung weisenden Seite des Schüttgutauslasses angeordnet ist und in seiner den Schüttgutauslaß öffnenden Stellung zumindest teilweise in den Strömungsweg der Förderrohrleitung ragt.

Bei einer solchen Förderanlage wird das Schüttgut im Nebenschluß zu der mit dem Hauptteil der Druckgasströmung beaufschlagten Förderrohrleitung eingeführt. Der Kegel steuert die Schüttgutströmung an einer Stelle mit niedriger Schüttgutgeschwindigkeit, verglichen mit der Schüttgutgeschwindigkeit in der Förderrohrleitung. Er ist deshalb nur geringem Verschleiß ausgesetzt und muß in seiner Schließstellung keine hohen Differenzdrücke abdichten.

In seiner Offenstellung mindert der Kegel den Strömungsquerschnitt der Förderrohrleitung, wodurch die Strömungsgeschwindigkeit des Druckgases zwischen Kegel und Schüttgutauslaß erhöht wird. Die anschließende Entspannung führt in diesem Bereich zu einem Unterdruck, der das Schüttgut aus dem Schüttgutauslaß nach Art einer "Wasserstrahlpumpe" absaugt. Es ergibt sich ein "Injector-Effekt", der das Schüttgut aus der für die Förderung kritischen Stelle des Schüttgutauslasses in die Förderrohrleitung einsaugt. Da der Kegel in der Offenstellung vom Druckgas freigeblasen wird, kann er rasch und verzögerungsfrei schließen, so daß keine die Kontinuität beeinflussenden Regelschwankungen auftreten können, wenn der Kegel auch während des Fördervorgangs in seine Schließstellung bewegt wird.

Für eine besonders hohe Saugwirkung ist der Kegel in seiner Offenstellung vorzugsweise im wesentlichen vollständig im Strömungsweg der Förderrohrleitung angeordnet. Die Sitzöffnung, gegen die er in seiner Schließstellung dichtend anliegt, sollte möglichst dicht an dem ihr zugewandten Wandbereich der Förderrohrleitung gelegen sein. Als günstig hat es sich erwiesen, wenn der Abstand der Sitzöffnung von dem oberen Wandbereich der Förderrohrleitung kleiner ist als der Durchmesser der Sitzöffnung.

Als weitere, die Strömungsgeschwindigkeit und damit die Saugwirkung im Bereich des Schüttgutauslasses erhöhende Maßnahme kann an der dem Schüttgutauslaß gegenüberliegenden Wandinnenseite der Förderrohrleitung ein zum Kegel hin abstehendes Strömungsleitblech angebracht sein, an dem der Kegelboden in der Offenstellung des Kegels anliegt. Ein derartiges Strömungsleitblech bietet mehrere Vorteile. Zum einen mindert es den zwischen Kegelboden und benachbarter Wandinnenseite der Förderrohrleitung verbleibenden Strömungsquerschnitt und lenkt die Druckgasströmung zum Schüttgutauslaß hin. Weiterhin dient das Strömungsleitblech als Anschlag für den Kegel und begrenzt den Hubweg. Da als Antriebsorgane für den Kegel zweckmäßigerweise pneumatische oder hydraulische Arbeitszylinder benutzt werden, können auch Arbeitszylinder mit größerem maximalen Arbeitshub, als es dem Hub des Kegels entsprechen würde, benutzt werden. Soweit der Arbeitszylinder auf der dem Drucksilo abgewandten Seite der Förderrohrleitung angeordnet ist, wird die den Kegel haltenden, dem Förderstrom ausgesetzte Betätigungsstange des Kegels durch das Strömungsleitblech vor Abrieb geschützt. Das Strömungsleitblech ist bevorzugt als Winkel mit in Strömungsrichtung gesehen divergierenden Schenkeln beiderseits der Kegelachse ausgebildet.

Eine weitere bevorzugte Maßnahme besteht darin, daß an einer die Förderrohrleitung verschließenden Stirnwand ein mit der Druckgasquelle verbundenes Zuleitungsrohr mündet, dessen Mündungsfläche kleiner als die Querschnittsfläche der Stirnwand und auch kleiner als der Querschnitt der Förderrohrleitung ist. Das Druckgas tritt aus dem Zuleitungsrohr aufgrund des geringeren Querschnitts mit hoher Strömungsgeschwindigkeit aus. Die Stirnwand ist dem Schüttgutauslaß dicht benachbart, so daß das Druckgas mit der hohen Austrittsgeschwindigkeit auf den Kegel trifft. Der Abstand der Stirnwand von der Kegelachse liegt in der Größenordnung des Durchmessers der Förderrohrleitung. Das Zuleitungsrohr mündet an der Stirnwand außermittig im Bereich der zuunterst gelegenen Wandinnenseite der Förderrohrleitung. Der mit hoher Strömungsgeschwindigkeit aus dem Zuleitungsrohr austretende Gasstrom reinigt damit den unterhalb des Schüttgutauslasses gelegenen Wandbereich, so daß sich hier kein Schüttgut ablagern kann.

Die Betätigung des Kegels erfolgt vorzugsweise über eine etwa gleichachsig zum Auslauftrichter angeordnete Betätigungsstange mittels eines hydraulischen oder pneumatischen Arbeitszylinders. Der Arbeitszylinder kann, um Dichtungsprobleme zu umgehen, innerhalb des Drucksilos, beispielsweise an einer Traverse gehalten sein. In einer anderen bevorzugten Ausführungsform ist der Arbeitszylinder an einem mit Anschlußstücken zum Anschließen an die Förderrohrleitung, die Druckgasquelle und den Drucksilo versehenen Rohransatz gehalten, der mit dem Arbeitszylinder und zumindest der Betätigungsstange und dem Kegel eine auswechselbare Baueinheit bildet. Eine solche Baueinheit läßt sich problemlos austauschen oder aber ggf. zur Nachrüstung bereits vorhandener pneumatischer Förderanlagen heranziehen.

Die Kobenstangendichtung des Arbeitszylinders ist zweckmäßigerweise nicht unmittelbar der Materialströmung in der Förderrohrleitung ausgesetzt. In einer bevorzugten Ausführungsform ragt die Kolbenstange des Arbeitszylinders unter Bildung eines Ringspalts durch eine Wandöffnung des Rohransatzes in dessen Innenraum hinein. Die axial außen gelegene Seite der Wandöffnung ist hierbei über einen Spülluftanschluß mit Spülluft beaufschlagbar. Die Eintrittsstelle der Kolbenstange in die Förderrohrleitung läßt sich hierdurch nicht nur außerordentlich gut gegen Schüttgut abdichten, sondern wird auch durch die Spülluft gereinigt und gekühlt. Dies ist insbesondere bei der Förderung von heißem Schüttgut von Vorteil. Um eine über den Umfang der Kolbenstange gleichmäßige Spülung zu erreichen, schließt sich an den Ringspalt zweckmäßigerweise ein Ringraum an, welcher mit dem Spülluftanschluß verbunden ist.

Um die Wartung der Baueinheit zu erleichtern, kann der Arbeitszylinder an einem Deckel gehalten sein, der abnehmbar eine den Ein- und Ausbau des Kegels gestattende Öffnung des Rohransatzes verschließt.

Die im Strömungsschatten gelegenen Bereiche des Rohransatzes verschleißen weniger stark als die vom Schüttgut angeblasenen Bereiche. Eine weitere zweckmäßige Maßnahme besteht deshalb darin, den Rohransatz bezogen auf die Kegelachse symmetrisch auszubilden, so daß er in beiden Strömungsrichtungen gleichermaßen benutzt und gegebenenfalls gewendet werden kann. Insbesondere kann vorgesehen sein, daß die axialen Stirnseiten gleiche Anschlußflansche tragen, die in gleichem axialem Abstand zur Kegelachse angeordnet sind.

Als günstig hat es sich erwiesen, wenn der Kegel in seiner Schließstellung an einer auswechselbar zwischen zwei Flanschen gehaltenen Sitzplatte mit kreisförmiger Sitzöffnung dichtend anliegt. Die Sitzplatte kann ohne großen Montageaufwand ausgetauscht werden, z. B. indem sie quer zu den Flanschen herausgezogen wird. Durch Auswechseln von Sitzplatten mit unterschiedlicher Lochgröße kann der maximale Schüttgutdurchsatz konstruktiv beeinflußt werden. Der Kegel kann ggf. für sämtliche Lochgrößen der Sitzplatten einheitlich beibehalten werden.

Soweit der Kegel herkömmlich den Schüttgutauslaß eines nach unten sich verjüngenden Auslauftrichters verschließt, kann er mit einer etwa vertikal verlaufenden Stange verbunden sein, an der innerhalb des Auslauftrichters Rührarme angebracht sind. Bei dieser Stange kann es sich um die Betätigungsstange des Arbeitszylinders handeln. Bei der Öffnungs- und Schließbewegung des Kegels lockern die Rührarme das Schüttgut im Drucksilo auf und verhindern eine Brückenbildung. Die Rührarme sind bevorzugt ebenfalls Bestandteile der vorstehend erwähnten Baueinheit.

Der Kegel wird vorzugsweise mittels einer Antriebseinrichtung periodisch zwischen seiner Schließstellung und seiner Offenstellung bewegt. Die Antriebseinrichtung kann hierzu eine einstellbare Zeitsteuerung aufweisen, was sich mit geringem konstruktivem Aufwand realisieren läßt. Durch Einstellen der Öffnungsdauer und/oder der Verschlußdauer mittels der Zeitsteuerung läßt sich die Förderleistung problemlos variieren und insbesondere auch unterschiedlichen Förderrohrlängen anpassen. Aus ein- und demselben Drucksilo können so in raschem Wechsel unterschiedlich lange Förderrohrleitungen beschickt werden. Zur Änderung der Förderleistung der Anlage muß insbesondere nicht die Druckgasmenge oder der Gasdruck variiert werden. Die Druckgasquelle liefert das Druckgas unter konstanten Bedingungen. Durch das periodische Öffnen und Schließen wird das Schüttgut pfropfenförmig durch die Förderrohrleitung gefördert. Damit können selbst solche Produkte energiesparend gefördert werden, die sich in der Förderleitung leicht verkeilen und zum Verstopfen der Förderrohrleitung neigen.

Mit Hilfe von Druckförderanlagen der vorstehend erläuterten Art lassen sich problemlos unterschiedliche
Schüttgüter mischen. Hierzu wird vorgeschlagen, daß
mehrere Drucksilos mit periodisch von Antriebseinrichtungen zwischen Schließstellung und Offenstellung
bewegten Kegeln an eine gemeinsame Förderrohrleitung
angeschlossen sind. Die Öffnungs- und Schließzeitpunkte der Antriebseinrichtungen sind hierbei zeitlich gestaffelt, so daß nacheinander aus unterschiedlichen Materialien bestehende Pfropfen gefördert werden. An den Ausgang der Förderrohrleitung ist ein Entspannungsgefäß oder ein Silo angeschlossen, in dem sich
die Pfropfen vermischen. Das Mischungsverhältnis läßt
sich problemlos durch das Verhältnis der den einzelnen
Schüttgütern zugeordneten Öffnungszeiten bestimmen.

Von Vorteil ist es, wenn die Druckgasquelle die Förderrohrleitung unabhängig vom Schüttgut-Füllzustand des
Drucksilos kontinuierlich mit Druckgas beaufschlagt.
Diese Betriebsweise vermeidet Druckstöße an den das
Schüttgut über die Förderrohrleitung aufnehmenden Geräten, beispielsweise Filtern.

Da der Hauptteil der Druckgasströmung unmittelbar der
Förderrohrleitung zugeführt wird, können zur Steuerung
der Förderanlage ausnutzbare Druckänderungen bereits in
dem vom schüttgutfreien Druckgasweg, beispielsweise in
die Förderrohrleitung mündenden Zuleitungsrohr erfaßt werden. Auf den Gasdruck im Druckgasweg ansprechende Druckfühler müssen nicht vor dem Schüttgut geschützt werden. Insbesondere müssen keine Sonderkonstruktionen, wie z. B. Membranmanometer o. dgl., benutzt werden.

Durch Überwachen des Gasdrucks im Zuleitungsweg des
Druckgases kann eine beginnende Verstopfung der Förderrohrleitung erfaßt und durch Schließen des Kegels verhindert werden. Vorzugsweise ist ein auf den Gasdruck zwischen Druckgasquelle und Förderrohrleitung ansprechender Druckfühler vorgesehen, der die Antriebseinrichtung des Kegels so steuert, daß sich der Kegel in seiner Schließstellung befindet, solange der Gasdruck über einer vorgegebenen Druckschwelle liegt. Der Druckfühler übersteuert hierbei die vorstehend erläuterte Zeitsteuerung.

Im folgenden sollen Ausführungsbeispiele der Erfindung anhand von Zeichnungen näher erläutert werden. Es zeigt:

Fig. 1 eine schematische Darstellung einer pneumatischen Druckförderanlage;

Fig. 2 konstruktive Einzelheiten eines Drucksilos der Druckförderanlage nach Fig. 1 mit daran angeschlossener Förderrohrleitung;

Fig. 3 eine schematische, teilweise aufgebrochene Darstellung eines in der pneumatischen Förderanlage nach Fig. 1 verwendbaren Beschickungskopfs;

Fig. 4 eine Detailansicht des Beschickungskopfs nach Fig. 3 entlang einer Linie IV-IV und

Fig. 5 eine schematische Darstellung einer zum Mischen von Schüttgut eingesetzten Druckförderanlage.

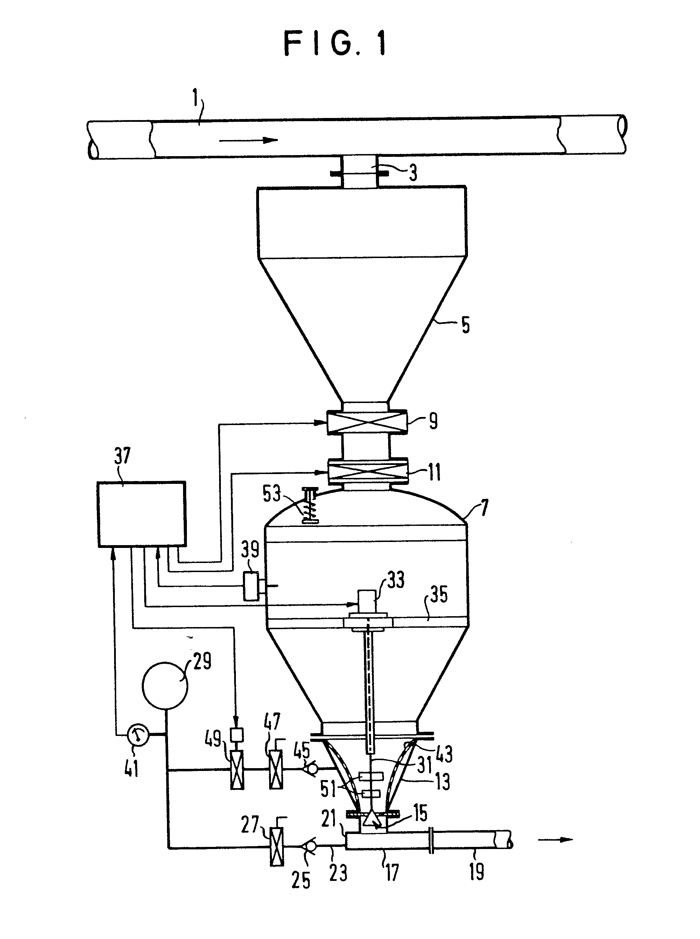

Fig. 1 zeigt eine Transportstrecke 1 nicht näher erläuterter Art, über die pulverförmiges, grießförmiges oder granulatförmiges Schüttgut transportiert oder angeliefert wird. Ein Teil des Schüttguts wird über einen Nebenweg 3 in einen im wesentlichen trichterförmigen Zwischensilo 5 abgezweigt. Unterhalb der Trichtermündung des Zwischensilos 5 ist ein Drucksilo 7 angeordnet, in den das Schüttgut über zwei steuerbare Absperrorgane 9 bzw. 11 eintritt. Das Absperrorgan 11 vermag den Drucksilo 7 dicht abzuschließen, während das über dem Absperrorgan 11 angeordnete, beispielsweise als einfacher Schieber ausgebildete Absperrorgan 9 lediglich den Schüttgutstrom sperren soll.

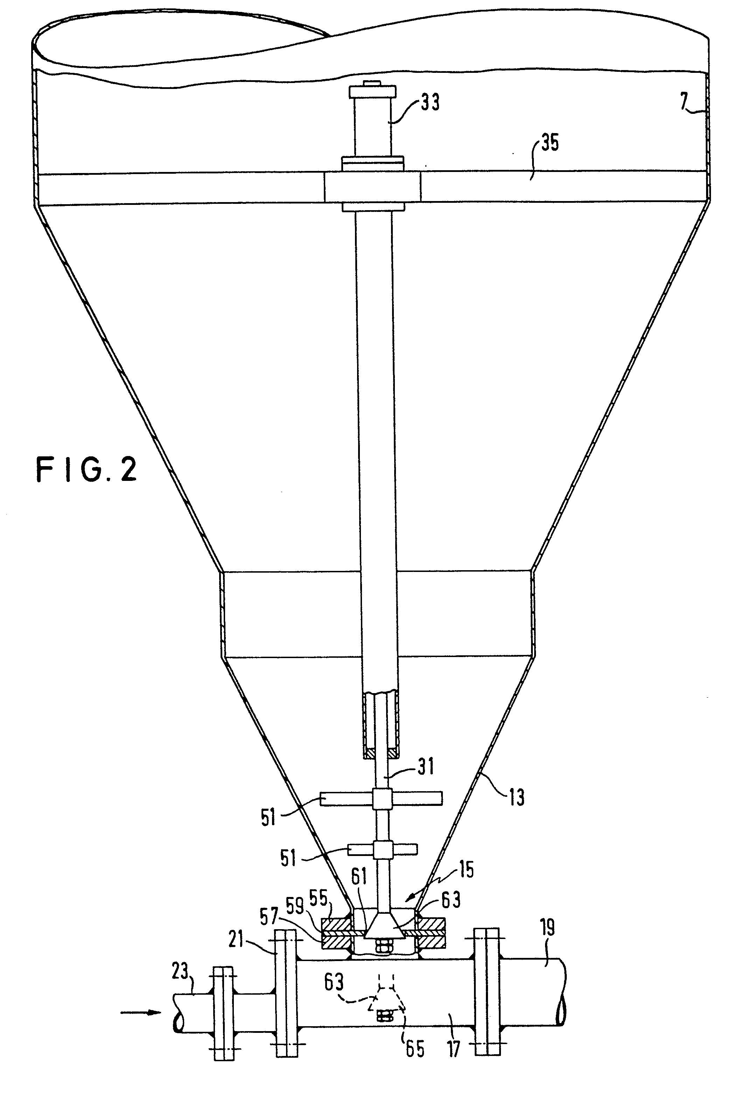

Die Unterseite des Drucksilos 7 bildet einen nach unten sich verjüngenden, mit etwa vertikaler Achse angeordneten Auslauftrichter 13, dessen Öffnung durch einen Kegelverschluß 15 verschließbar ist. Die Trichtermündung des Auslauftrichters 13 mündet von oben her in einen horizontalen Rohransatz 17, dessen Rohrachse die Trichterachse schneidet. An das eine Ende des Rohransatzes 17 schließt sich eine Förderrohrleitung 19 an, über die das Schüttgut abgeblasen werden soll. Das andere Ende des Rohransatzes 17 ist, wie am besten Fig. 2 zeigt, durch eine Flanschscheibe 21 verschlossen, in die parallelachsig eine Druckluftleitung 23 einmündet. Die Druckluftleitung 23 verbindet den Rohransatz 17 und damit die Förderrohrleitung 19 über ein Rückschlagventil 25 und ein von Hand einstellbares Drosselventil 27 mit einer Druckluftquelle 29. Die Druckluftquelle 29 liefert über die Druckluftleitung 23 den Hauptanteil der über die Förderrohrleitung 19 abströmenden Druckluft.

Der Kegelverschluß wird über eine gleichachsig zum Auslauftrichter 13 angeordnete Betätigungsstange 31 von einem pneumatischen oder hydraulischen Arbeitszylinder 33 geöffnet bzw. geschlossen. Der Arbeitszylinder 33 ist im Inneren des Drucksilos 7 an einer Traverse 35 angebracht.

Die Förderanlage wird von einer Steuerung 37 wie folgt gesteuert, wobei zunächst angenommen werden soll, daß der Drucksilo 7 leer ist. Bei leerem Drucksilo 7 hält die Steuerung 37 den Kegelverschluß 15 geschlossen und die Absperrorgane 9 und 11 geöffnet. Das im Zwischensilo 5 angesammelte Schüttgut strömt in den druckfreien Drucksilo 7 ein. Während des Füllvorgangs kann die Druckluftquelle 29 eingeschaltet bleiben, so daß sie die Förderrohrleitung 19 kontinuierlich mit Druckluft beaufschlagt. Ein beispielsweise kapazitiver Pegelmesser 39 spricht an, sobald der Schüttgutpegel den gewünschten Maximalpegel erreicht hat. Daraufhin schließt die Steuerung 37 zuerst das Absperrorgan 9 und dann das Absperrorgan 11. Anschließend wird der Kegelverschluß 15 geöffnet. Das Schüttgut fließt über den Auslauftrichter 13 in den Rohransatz 17 und wird über die Förderrohrleitung 19 abgeblasen.

Die Steuerung 37 öffnet und schließt während des Fördervorgangs periodisch den Kegelverschluß 15. Die Schüttgutförderleistung wird durch das Verhältnis der Öffnungsdauer zur Verschlußdauer des Kegelverschlusses 15 bestimmt. Die Öffnungsdauer und die Verschlußdauer sind gesondert an der Steuerung 37 stufenlos einstellbar. Auf diese Weise kann die Förderleistung der Förderanlage variiert werden, ohne daß der Druckluftdurchsatz der Druckluftquelle variiert werden müßte. Die Förderanlage kann auf diese Weise rasch an unterschiedliche Förderrohrlängen oder an Schüttgüter mit unterschiedlichen Fließeigenschaften angepaßt werden. Ist das gesamte Schüttgut aus dem Drucksilo 7 ausgelaufen und die Förderrohrleitung 19 leergeblasen, so sinkt der Druck in der Druckluftleitung 23 ab. Dies kann mittels eines Druckfühlers 41 erfaßt werden, der daraufhin über die Steuerung 37 zuerst den Kegelverschluß 15 verschließt und dann nacheinander das Verschlußorgan 11 und dann das Verschlußorgan 9 für den nächsten Füllvorgang öffnet.

Eine beginnende Pfropfenbildung oder Verstopfung der Förderrohrleitung 19 führt zu einem Druckanstieg in der Druckluftleitung 23. Erfaßt der Druckfühler 41 einen über einen vorgegebenen Druckschwellwert hinaus ansteigenden Luftdruck, so wird über die Steuerung 37 der Kegelverschluß 15 geschlossen, bis der Luftdruck wieder unter den vorgegebenen Wert abgesunken ist. Auf diese Weise kann das Verstopfen der Förderrohrleitung 19 sicher vermieden werden.

Um Brückenbildung des Schüttguts im Auslauftrichter 13 zu verhindern, ist im Abstand von der Innenseite des Auslauftrichters 13 eine ebenfalls trichterförmige Verkleidung 43 angebracht, die aus einem porösen Material, beispielsweise einem porösen Sintermaterial, einem Lochblech oder einem luftdurchlässigen Gewebe besteht. Der dadurch gebildete Zwischenraum ist über ein Rückschlagventil 45, ein von Hand einstellbares Drosselventil 47 und ein über die Steuerung 37 steuerbares Ventil 49 ebenfalls mit der Druckluftquelle 29 verbunden. Die Steuerung 37 öffnet während der Förderphase der Anlage das Ventil 49, so daß Druckluft über die Verkleidung 43 in den Drucksilo 7 eintreten und das Schüttgut auflockern kann. Der über die Verkleidung 43 eintretende Luftanteil ist jedoch verglichen mit dem Luftanteil der Förderrohrleitung 19 gering. Zusätzlich zur Verkleidung 43 oder statt der Verkleidung 43 können an der Betätigungsstange 31 des Kegelverschlusses 15 Rührarme 51 angebracht sein, die das Schüttgut bei der periodischen Öffnungs- und Schließbewegung des Kegelverschlusses 15 auflockern.

Der Drucksilo 7 weist in üblicher Weise ein Überdruckventil 53 auf.

Fig. 2 zeigt Einzelheiten des Kegelverschlusses 15. Dieser weist eine zwischen zwei Rohrflanschen 55 bzw. 57 auswechselbar gehaltene Sitzplatte 59 mit einer kreisförmigen Sitzöffnung 61 sowie einen an der Betätigungsstange 31 angebrachten Ventilkegel 63 auf. Der Ventilkegel 63 ist auf der Seite des Rohransatzes 17 angeordnet und verjüngt sich zum Drucksilo 7 hin. Er wird vom Arbeitszylinder 33 beim Schließen des Kegelverschlusses 15 in die Öffnung 61 eingezogen. Beim Öffnen des Kegelverschlusses 15 schiebt der Arbeitszylinder 33 den Ventilkegel 63 vollständig in den Rohransatz 17 hinein, um einen ungehinderten Übertritt des Schüttguts vom Auslauftrichter 13 in den Rohransatz 17 zu vermöglichen. Die Offenstellung des Ventilkegels 63 ist in Fig. 2 bei 65 gestrichelt eingezeichnet. Da die Ventilplatte 59 auswechselbar gehalten ist, kann sie gegen solche mit unterschiedlichem Öffnungsdurchmesser ausgetauscht werden.

Der Ventilkegel 63 mindert den Strömungsquerschnitt im Rohransatz 17, was zu einer Erhöhung der Strömungsgeschwindigkeit der Druckluft im Bereich zwischen dem in der Offenstellung befindlichen Ventilkegel 63 und der Öffnung 61 führt. Die Anschließende Entspannung bewirkt nach Art einer "Wasserstrahlpumpe" einen Saugeffekt, der das Schüttgut aus der Öffnung 61 in den Rohransatz 17 einsaugt. Darüber hinaus trägt die an dieser Stelle erhöhte Strömungsgeschwindigkeit zur Beschleunigung des Schüttguts in energiesparender Weise bei.

Die Druckluftleitung 23 mündet außermittig in der den Rohransatz 17 verschließenden Flanschscheibe 21, und zwar im zuunterst gelegenen Bereich. Die aus der Druckluftleitung 23 austretende Druckluft bläst damit über den der Öffnung 61 gegenüberliegenden Bodenbereich und reinigt diesen von Schüttgut. Damit ist sichergestellt, daß der Kegel 63 störungsfrei in seine Offenstellung bewegt werden kann.

Die Mündungsfläche der Druckluftleitung 23 ist kleiner als die Querschnittsfläche des Rohransatzes 17. Die Druckluft drückt damit mit hoher Strömungsgeschwindigkeit in den Rohransatz 17 ein. Da die Flanschscheibe 21 relativ nahe der Öffnung 61 angeordnet ist, beispielsweise in der Größenordnung des 1 1/2-fachen Innendurchmessers des Rohransatzes 17 von der Kegelachse entfernt ist, hat der Luftstrom in diesem Bereich noch hohe Geschwindigkeit, was sich vorteilhaft auf den vorstehend erläuterten Saugeffekt bzw. Injektoreffekt auswirkt und die Luft-Material-Mischung beschleunigt.

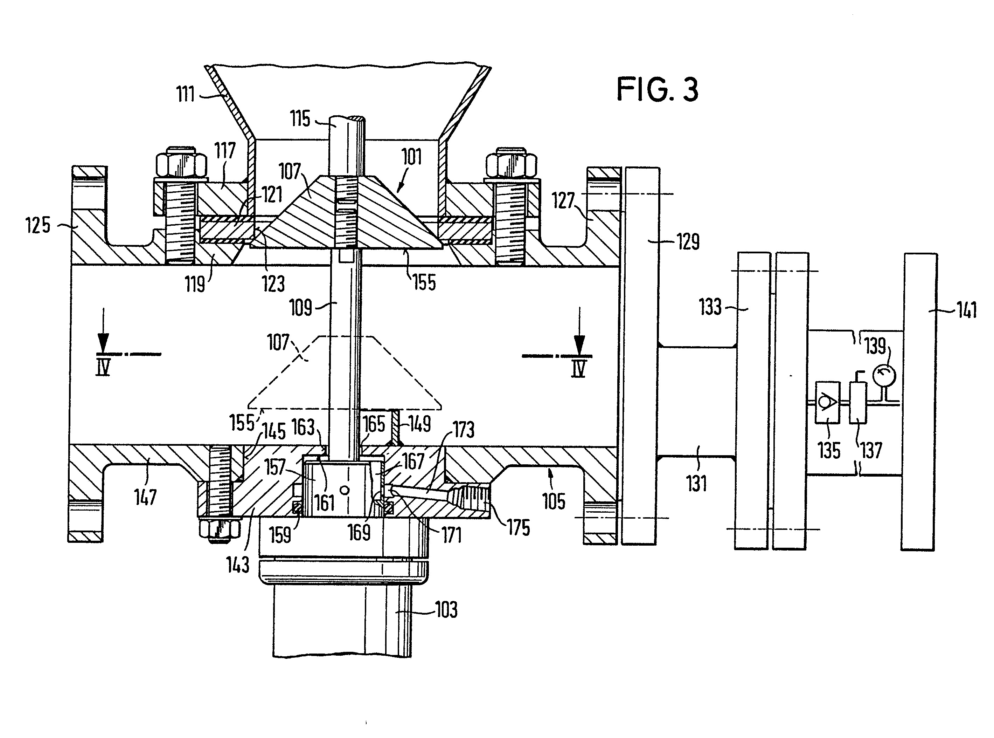

Fig. 3 zeigt Einzelheiten einer anderen Ausführungsform einer pneumatischen Förderanlage, bei der im Unterschied zur Ausführungsform der Fig. 1 und 2 zur Betätigung eines Kegelverschlusses 101 ein hydraulischer oder pneumatischer Arbeitszylinder 103 nicht dem Arbeitszylinder 33 der Fig. 1 entsprechend an einer Traverse des Drucksilos, sondern an der Unterseite eines dem Rohransatz 17 entsprechenden Rohransatzes 105 befestigt ist. Der dem Verschlußkegel 63 entsprechende Verschlußkegel 107 des Kegelverschlusses 101 sitzt auf einer Kolbenstange 109 des Arbeitszylinders 103 und trägt an seiner Spitze eine in einen Auslauftrichter 111 des Drucksilos ragende, mit Rührarmen (nicht dargestellt) versehene, gleichachsig zur Kegelachse und Trichterachse verlaufende Stange 115. Zwischen Ringflanschen 117 bzw. 119 des Auslauftrichters 111 bzw. des Rohransatzes 105 sitzt wiederum auswechselbar eine Sitzplatte 121 des Kegelverschlusses 101, gegen deren kreisförmige Sitzöffnung 123 der Verschlußkegel 107 in seiner Schließstellung dicht anliegt. An der Förderrohrseite des Rohrstutzens 105 ist dieser mit einem Verbindungsflansch 125 versehen. Die Druckluftzufuhrseite des Rohransatzes 105 trägt einen Verbindungsflansch 127. Die Verbindungsflansche 125, 127 sind gleich ausgebildet und haben gleichen Abstand zur Achse des Verschlußkegels 107. Der Rohransatz 105 ist damit symmetrisch zur Kegelachse und kann bei Verschleiß gewendet werden. Die Druckluftleitung mündet wiederum in einer Flanschscheibe 129, wobei der Mündungsquerschnitt durch ein Rohrstück 131 bestimmt wird, welches zwischen der Flanschscheibe 129 und einem Verbindungsflansch 133 angeordnet ist. Das Rohrstück 131 bildet eine auswechselbare Düse. An die Druckluftzufuhrseite des Verbindungsflansches 133 ist der Reihe nach zur Druckluftquelle hin ein Rückschlagventil 135, ein von Hand einstellbares Drosselventil 137 und ein Kontaktmanometer 139 angeflanscht. Das Rückschlagventil 135, das Drosselventil 137 und das Kontaktmanometer 139 sind in Fig. 3 lediglich schematisch angedeutet. Diese Bauteile entsprechen den Bauteilen 25, 27 und 41 der Ausführungsform nach Fig. 1. Zum Anschließen einer Druckluftleitung ist ein Rohrflansch 141 vorgesehen. Die Bauteile 103, 105, 107, 131, 135, 137 und 139 bilden eine Baueinheit, die durch Lösen der Flansche 117, 125 und 141 komplett ausgetauscht werden kann. Die Baueinheit ist auch zur Nachrüstung bereits vorhandener Druckförderanlagen geeignet. Das Rückschlagventil 135, das Drosselventil 137 und das Kontaktmanometer 139 können auch gesondert von der Baueinheit vorgesehen sein.

Der Arbeitszylinder 103 ist an einem Deckel 143 angebracht, der eine der Öffnung 123 der Sitzplatte 121
gegenüberliegende Öffnung 145 der unteren Seitenwand
147 des Rohransatzes 105 verschließt. Der Durchmesser
der Öffnung 145 ist geringfügig größer als der größte
Durchmesser des Verschlußkegels 107. Damit kann der Arbeitszylinder 103 zusammen mit dem Verschlußkegel 107
ein- und ausgebaut werden, ohne daß der Rohransatz 105
demontiert werden müßte.

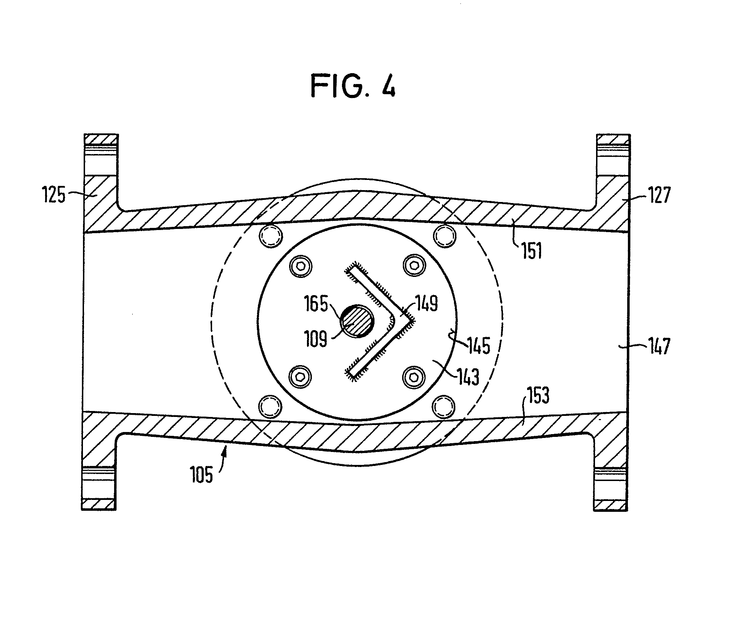

Die Funktionsweise der vorstehend erläuterten Baueinheit entspricht derjenigen der Förderanlage gemäß den
Fig. 1 und 2. Insbesondere ist der Rohransatz 105 so
bemessen, daß der vorstehend erläuterte Saugeffekt einerseits und Düseneffekt der Druckluftzuführung andererseits die Förderung des Schüttguts aus dem Auslauftrichter 111 in die Förderrohrleitung unterstützt. Zusätzlich ist an der der Öffnung 123 der Sitzplatte 121 gegenüberliegenden Innenfläche des Deckels 143 eine zur
Sitzplatte 121 aufragende, winkelförmige Strömungsblende 149 angebracht, deren Spitze zum Drucklufteinlaß des Rohransatzes 105 weist und deren Schenkel, wie
am besten aus Fig. 4 ersichtlich ist, in Strömungsrichtung seitlich der Kolbenstange 109 vorbeireichen. Die
Schenkel der Strömungsblende 149 enden im Abstand von
vertikalen Seitenwänden 141, 153 des Rohransatzes 105.
In seiner Offenstellung sitzt der Verschlußkegel 107
mit seinem Boden 155 auf der nach oben weisenden Kante
der Strömungsblende 149 auf. Die Strömungsblende 149
bildet somit einen wegbegrenzenden Anschlag und schützt die Kolbenstange 109 in der Offenstellung des Kegelverschlusses 101 vor Abrieb. Darüber hinaus lenkt sie in Verbindung mit dem Verschlußkegel 107 in dessen Offenstellung den Druckluftstrom nach oben und verstärkt so den Saug- und Vermischungseffekt. Der Rohransatz 105 wie auch gegebenenfalls der Rohransatz 17 der Fig. 1 hat Rechteckquerschnitt, wobei der Wandabstand quer zur Kegelachse nur wenig größer als der größte Durchmesser des Verschlußkegels 107 ist. Die lichte Weite der Flansche 125, 127 ist geringer als dieser Durchmesser. Dementsprechend sind die vertikalen Wände 151, 153 von innen gesehen konkav gewölbt.

Der Arbeitszylinder 103 trägt kolbenstangenseitig einen hohlzylindrischen Zentrieransatz 157, der mittels einer Dichtung 159 abgedichtet in einer Kammer 161 des Deckels 143 sitzt. Die Kolbenstange 109 tritt durch eine Öffnung 163 am Boden der Kammer 161 hindurch in den Rohransatz 105 ein und bildet zusammen mit der Öffnung 163 einen Ringspalt 165. Die Kammer 161 bzw. der Zentrieransatz 157 bildet zusammen mit der Kolbenstange einen Ringraum 167 zwischen dem Ringspalt 163 und einer nicht näher dargestellten, die Kolbenstange 109 abdichtenden Dichtungsmanschette des Arbeitszylinders 103. Der Ringraum 167 ist über Öffnungen 169 mit einem den Zentrieransatz 157 umgebenden Ringkanal 171 verbunden, der seinerseits über einen Kanal 173 mit einem Spülluftanschluß 175 in Verbindung steht. Über den Spülluftanschluß 175 zugeführte Druckluft spült die Kolbenstange 109 am Ringspalt 163. Hierdurch wird der Arbeitszylinder nicht nur hervorragend abgedichtet, sondern auch gekühlt, was insbesondere bei der Förderung heißen Schüttguts von Vorteil ist.

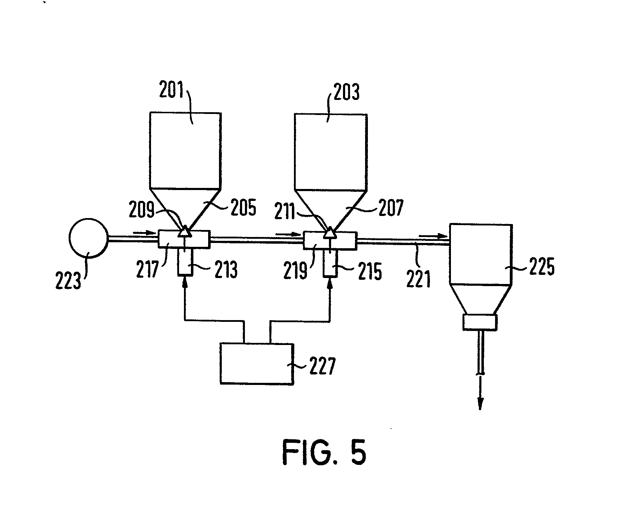

Druckförderanlagen der vorstehend erläuterten Art lassen sich zum Mischen mehrerer Schüttgutsorten ausnutzen. Fig. 5 zeigt eine Druckförderanlage mit zwei Drucksilos 201, 203, deren Auslauftrichter 205 bzw. 207 durch Kegelventile 209 bzw. 211 verschließbar sind. Zur Betätigung der Kegelverschlüsse 209, 211 sind Arbeitszylinder 213 bzw. 215 vorgesehen. Die Auslauftrichter 205, 207 münden von oben her in Rohransätze 217 bzw. 219, die in Strömungsrichtung hintereinander in eine gemeinsame Förderrohrleitung 221 geschaltet sind. Der am Eingang der Förderrohrleitung 221 vorgesehene Rohransatz 217 ist mit einer die Förderluft liefernden Druckluftquelle 223 verbunden, während der Ausgang der Förderrohrleitung 221 in ein Entspannungsgefäß 225, beispielsweise einen Silo, mündet. Eine elektrische Steuerung 227 öffnet bzw. schließt die Kegelventile 209, 211 periodisch, jedoch zeitlich gestaffelt. Die Förderrohrleitung 221 wird damit in vorgebbarer Reihenfolge aus den Drucksilos 201, 203 mit Schüttgutpfropfen beschickt. Das Verhältnis der Offenzeiten der Kegelverschlüsse 209, 211 bestimmt das Mischungsverhältnis der jeweiligen Schüttgüter in dem Entspannungsgefäß 225. Ausbildung und Funktionsweise der Kegelverschlüsse 209, 211, der Rohransätze 217, 219, der Arbeitszylinder 213, 215 entspricht den Verhältnissen der vorstehend erläuterten Ausführungsformen.

Patentansprüche

1. Pneumatische Förderanlage für Schüttgut, mit einem druckdicht verschließbaren Drucksilo (7) für das Schüttgut, welcher an seiner Unterseite einen mittels eines höhenbeweglichen Kegels (63; 107) querschnittsveränderbaren Schüttgutauslaß (61; 123) aufweist und mit einer an eine Druckgasquelle (29) angeschlossenen Förderrohrleitung (17, 19; 105), in deren Strömungsweg der Schüttgutauslaß von oben her einmündet, dadurch gekennzeichnet, daß der Kegel (63; 107) mit zum Schüttgutauslaß (61; 123) weisender Spitze auf der zur Förderrohrleitung (17, 19; 105) weisenden Seite des Schüttgutauslasses (61; 123) angeordnet ist und in seiner den Schüttgutauslaß (61; 123) öffnenden Stellung zumindest teilweise in den Strömungsweg der Förderrohrleitung (17, 19; 105) ragt.

2. Förderanlage nach Anspruch 1, dadurch gekennzeichnet, daß der Kegel (63; 107) in seiner Offenstellung im wesentlichen vollständig im Strömungsweg der Förderrohrleitung (17, 19; 105) angeordnet ist.

3. Förderanlage nach Anspruch 2, dadurch gekennzeichnet, daß der Kegel (63; 107) in seiner den Schüttgutauslaß schließenden Stellung an einer kreisförmigen Sitzöffnung (61; 123) dichtend anliegt, deren Durchmesser größer als ihr Abstand vom oberen Wandbereich der Förderrohrleitung (17, 19; 105) ist.

4. Förderanlage nach Anspruch 1, dadurch gekennzeichnet, daß an der dem Schüttgutauslaß (61; 123) gegenüberliegenden Wandinnenseite der Förderrohrleitung (105) ein zum Kegel (63; 107) hin abstehendes Strömungsleitblech (149) angebracht ist, an dem der Kegelboden in der Offenstellung des Kegels (63; 107) anliegt.

5. Förderanlage nach Anspruch 4, dadurch gekennzeichnet, daß das Strömungsleitblech (149) als Winkel mit in Strömungsrichtung gesehen divergierenden Schenkeln beiderseits der Kegelachse ausgebildet ist.

6. Förderanlage nach Anspruch 4, dadurch gekennzeichnet, daß die Förderrohrleitung (105) im Bereich des Schüttgutauslasses (61; 123) als Rohransatz (17; 105) mit Rechteckquerschnitt ausgebildet ist, dessen parallel zur Kegelachse verlaufende Wände voneinander einen Abstand etwa gleich dem größten Kegeldurchmesser haben.

7. Förderanlage nach Anspruch 6, dadurch gekennzeichnet, daß das Strömungsleitblech (149), gesehen in Strömungsrichtung mit Abstand von den zur Kegelachse parallelen Wänden des Rohransatzes (105) endet.

8. Förderanlage nach Anspruch 1, dadurch gekennzeichnet, daß an einer die Förderrohrleitung (17, 19; 105) verschließenden Stirnwand (21) ein mit der Druckgasquelle (29) verbundenes Zuleitungsrohr (23) mündet, dessen Mündungsfläche kleiner als die Querschnittsfläche der Stirnwand (21) ist.

9. Förderanlage nach Anspruch 8, dadurch gekennzeichnet, daß das Zuleitungsrohr (23) an der Stirnwand (21) außermittig im Bereich der zuunterst gelegenen Wandinnenseite der Förderrohrleitung (17, 19; 105) mündet.

10. Förderanlage nach Anspruch 1, dadurch gekennzeichnet, daß der Kegel (63; 107) in seiner Schließstellung an einer auswechselbar zwischen zwei Flanschen (55,
57; 117, 119) gehaltenen Sitzplatte (59; 121) mit
einer kreisförmigen Sitzöffnung (61; 123) dichtend
anliegt.

11. Förderanlage nach Anspruch 1, dadurch gekennzeichnet, daß der Kegel (63) an einer zu ihm gleichachsigen,
mit dem Kolben eines hydraulischen oder pneumatischen
Arbeitszylinders (33) verbundenen Betätigungsstange
(31) gehalten ist und daß der Arbeitszylinder (33) im
Inneren des Drucksilos (7) an einer Traverse (35) angebracht ist.

12. Förderanlage nach Anspruch 1, dadurch gekennzeichnet, daß der Kegel (107) an einer zu ihm gleichachsigen, mit dem Kolben eines hydraulischen oder pneumatischen Arbeitszylinders (103) verbundenen Betätigungsstange (109) gehalten ist, und daß der Arbeitszylinder
(103) an einem mit Anschlußstücken (119, 125, 127)
zum Anschließen an die Förderrohrleitung, die Druckgasquelle und den Drucksilo versehenen Rohransatz (105)
gehalten ist, der mit dem Arbeitszylinder (103) und
zumindest der Betätigungsstange (109) und dem Kegel
(107) eine auswechselbare Baueinheit bildet.

13. Förderanlage nach Anspruch 12, dadurch gekennzeichnet, daß der Arbeitszylinder (103) an der Unterseite des Rohransatzes (105) angebracht ist.

14. Förderanlage nach Anspruch 12, dadurch gekennzeichnet, daß der Arbeitszylinder (103) an einem Deckel
(143) gehalten ist, der abnehmbar eine den Ein- und
Ausbau des Kegels (107) gestattende Öffnung (145) des
Rohransatzes (105) verschließt.

15. Förderanlage nach Anspruch 12, dadurch gekennzeichnet, daß die Kolbenstange (109) des Arbeitszylinders (103) unter Bildung eines Ringspalts (165) durch eine Wandöffnung (163) des Rohransatzes (105) in dessen Innenraum hineinragt und daß die axial außen gelegene Seite der Wandöffnung (163) über einen Spülluftanschluß (175) mit Spülluft beaufschlagbar ist.

16. Förderanlage nach Anspruch 14, dadurch gekennzeichnet, daß der Spülluftanschluß (175) mit einem an die Wandöffnung (163) sich anschließenden Ringraum (161) zwischen dem Ringspalt (163) und einer die Kolbenstange (109) abdichtend umschließenden Dichtmanschette des Arbeitszylinders (103) verbunden ist.

17. Förderanlage nach Anspruch 11 und 12, dadurch gekennzeichnet, daß der Kegel (63; 107) den Schüttgutauslaß (61; 123) eines nach unten sich verjüngenden Auslauftrichters (13; 111) verschließt und an einer etwa vertikal verlaufenden Stange (31; 115) Rührarme (51) innerhalb des Auslauftrichters (13; 111) trägt.

18. Förderanlage nach Anspruch 1, dadurch gekennzeichnet, daß die Förderrohrleitung im Bereich des Schüttgutauslasses (123) als Rohransatz (105) ausgebildet ist, dessen axiale Stirnseiten in gleichem axialem Abstand zur Kegelachse gleiche Anschlußflansche (125, 127) tragen.

19. Förderanlage nach Anspruch 1, dadurch gekennzeichnet, daß eine Antriebseinrichtung (33, 37; 103; 213, 215) den Kegel (63; 107; 209, 211) periodisch zwischen seiner Schließstellung und seiner Offenstellung bewegt.

20. Förderanlage nach Anspruch 19, dadurch gekennzeichnet, daß mehrere Drucksilos (201, 203) mit periodisch von Antriebseinrichtungen (213, 215) zwischen Schließstellung und Offenstellung bewegten Kegeln (209, 211) an eine gemeinsame Förderrohrleitung (221) angeschlossen sind und daß die Öffnungs- und Schließzeitpunkte der Antriebseinrichtungen (213, 215) zeitlich gestaffelt sind.

21. Förderanlage nach Anspruch 19, dadurch gekennzeichnet, daß die Druckgasquelle (29) derart an die Förderrohrleitung (17, 19; 105) angeschlossen ist, daß sie die Förderrohrleitung (17, 19; 105) unabhängig vom Schüttgut-Füllzustand des Drucksilos (7) mit Druckgas beaufschlagt.

22. Förderanlage nach Anspruch 19, dadurch gekennzeichnet, daß ein auf den Gasdruck zwischen Druckgasquelle (29) und Förderrohrleitung (17, 19; 105) ansprechender Druckfühler (41; 139) die Antriebseinrichtung (33, 37; 103) so steuert, daß sich der Kegel (63; 107) in seiner Schließstellung befindet, solange der Gasdruck über einer vorgegebenen Druckschwelle liegt.

# FIG. 1

FIG.2

FIG. 3

# FIG. 4

FIG. 5